# EUROPEAN PATENT APPLICATION

(11) **EP 4 535 879 A1**
(43) Date of publication of application: **09.04.2025**
(21) Application number: 23811070.4
(22) Date of filing: 23.05.2023
(51) Int. Cl.: H04W 52/02

(54) **COMMUNICATION METHOD AND APPARATUS, DEVICE, AND STORAGE MEDIUM**

(30) Priority: 26.05.2022 CN 202210582213
(71) Applicant: Spreadtrum Semiconductor (Nanjing) Co., Ltd., Nanjing, Jiangsu 210000 (CN)
(72) Inventor: LEI, Zhenzhu, Nanjing, Jiangsu 210000 (CN)
(74) Representative: Ipside
(86) International application number: PCT/CN2023/095909
(87) International publication number: WO 2023/226999

(57) **Abstract**

The embodiments of the present application provide a communication method, an apparatus, a device, and a storage medium. Measurement request information sent by a second terminal device is received, and a positioning reference signal is sent to the second terminal device based on the measurement request information, where the positioning reference signal is used to determine a position of the second terminal device. The energy consumption of the terminal device is reduced.

## Description

The present application claims priority to Chinese Patent Application No. 202210582213.4, filed to China National Intellectual Property Administration on May 26, 2022 and entitled "COMMUNICATION METHOD, APPARATUS, DEVICE, AND STORAGE MEDIUM", the contents of which are hereby incorporated by reference in its entireties.

### TECHNICAL FIELD

The present application relates to the field of communication technology and, in particular, to a communication method, an apparatus, a device, and a storage medium.

### BACKGROUND

The third generation partnership project (third generation partnership project, 3GPP) is researching a positioning technology based on a direct link (side link), i.e., terminal devices can locate each other through the direct link. For example, a first terminal device sends a positioning reference signal, and a second terminal device receives the positioning reference signal and measures the positioning reference signal to obtain position information of the second terminal device.

In the positioning process described above, the first terminal device needs to continue sending the positioning reference signal so that the second terminal device can measure the positioning reference signal sent by the first terminal device at any time. This results in high energy consumption for the terminal device.

### SUMMARY

The embodiments of the present application provide a communication method, an apparatus, a device, and a storage medium to reduce energy consumption of a terminal device.

In a first aspect, an embodiment of the present application provides a communication method, applied to a first terminal device, the method including:
receiving measurement request information sent by a second terminal device; and
sending a positioning reference signal to the second terminal device based on the measurement request information; where the positioning reference signal is used to determine a position of the second terminal device.

In a possible embodiment, the measurement request information includes at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal;
a length of a measurement occasion of the positioning reference signal.

In a possible embodiment, the method further includes:
receiving first indication information sent by the second terminal device; and
determining whether to continue sending the positioning reference signal to the second terminal device based on the first indication information.

In a possible embodiment, the determining whether to continue sending the positioning reference signal to the second terminal device based on the first indicative information includes:
if the first indication information indicates to continue sending, determining to continue sending the positioning reference signal to the second terminal device; and
if the first indication information indicates to stop sending, determining to stop sending the positioning reference signal to the second terminal device.

In a possible embodiment, the first indication information is transmitted through a physical side link feedback channel PSFCH.

In a possible embodiment, the first indication information is indicated by a preset bit in the PSFCH.

In a possible embodiment, the method further includes:
receiving second indication information sent by the second terminal device; and
continuing to send the positioning reference signal to the second terminal device based on the second indication information.

In a possible embodiment, the receiving the second indication information sent by the second terminal device includes:
starting a first timer at a first moment, and receiving the second indication information sent by the second terminal device during a running of the first timer.

In a possible embodiment, the continuing to send the positioning reference signal to the second terminal device based on the second indication information includes:
based on the second indication information, restarting the first timer and continuing to send the positioning reference signal to the second terminal device during the running of the first timer.

In a possible embodiment, the method further includes:
stopping sending the positioning reference signal to the second terminal device after the first timer overtimes.

In a possible embodiment, the method further includes:
if second indication information sent by the second terminal device is not received, stopping sending the positioning reference signal to the second terminal device.

In a possible embodiment, the if the second indication information sent by the second terminal device is not received, stopping sending the positioning reference signal to the second terminal device includes:
starting a first timer at a first moment, and if the second indication information sent by the second terminal device is not received during a running of the first timer, stopping sending the positioning reference signal to the second terminal device after the first timer overtimes.

In a possible embodiment, the second indication information is transmitted through a PSFCH.

In a possible embodiment, the second indication information is indicated by a preset bit in the PSFCH.

In a possible embodiment, the method further includes:
receiving third indication information sent by the second terminal device; and
stopping sending the positioning reference signal to the second terminal device based on the third indication information.

In a possible embodiment, the receiving the third indication information sent by the second terminal device includes:
starting a second timer at a first moment, and receiving the third indication information sent by the second terminal device during a running of the second timer.

In a possible embodiment, a moment to stop sending the positioning reference signal is less than or equal to a termination moment of the second timer.

In a possible embodiment, the method further includes:
if third indication information sent by the second terminal device is not received, continuing sending the positioning reference signal to the second terminal device.

In a possible embodiment, the method further includes:
starting a second timer at a first moment, and if the third indication information sent by the second terminal device is not received during a running of the second timer, stopping sending the positioning reference signal to the second terminal device after the second timer overtimes.

In a possible embodiment, the third indication information is transmitted through a PSFCH.

In a possible embodiment, the third indication information is indicated by a preset bit in the PSFCH.

In a possible embodiment, the method further includes:
starting a third timer at a first moment, and stopping sending the positioning reference signal to the second terminal device if the third timer overtimes.

In a possible embodiment, the first moment is the moment when the positioning reference signal is started to send to the second terminal device; where a time interval between the first moment and a moment receiving the measurement request information is greater than or equal to 0.

In a second aspect, an embodiment of the present application provides a communication apparatus, including: a receiving module and a sending module;
where the receiving module is configured to receive measurement request information sent by a second terminal device; and
the sending module is configured to send a positioning reference signal to the second terminal device based on the measurement request information; where the positioning reference signal is used to determine a position of the second terminal device.

In a third aspect, an embodiment of the present application provides an electronic device, including: a memory, a processor;
the memory is configured to store computer-executable instructions; and
the processor executes the computer-executed instructions stored in the memory, to cause the processor to execute the communication method according to any one of the first aspect.

In a fourth aspect, an embodiment of the present application provides a computer-readable storage medium, where the computer-readable storage medium stores computer-executed instructions therein, when the computer-executed instructions are executed by a processor, the communication method according to any one of s the first aspect is implemented.

In a fifth aspect, an embodiment of the present application provides a computer program product, including a computer program, when the computer program is executed by a processor, the communication method according to any one of the first aspect is implemented.

The embodiments of the present application provide a communication method, an apparatus, a device, and a storage medium. Measurement request information sent by a second terminal device is received, and a positioning reference signal is sent to the second terminal device based on the measurement request information. The first terminal device does not need to send the positioning reference signal all the time, and the energy consumption of the terminal device is reduced.

In a sixth aspect, an embodiment of the present application provides a communication method, applied to a second terminal device, the method including:
sending measurement request information to a first terminal device;
receiving a positioning reference signal sent by the first terminal device;
measuring the positioning reference signal to obtain a measurement result; and
determining a position of the second terminal device based on the measurement result.

In a possible embodiment, the measurement request information includes at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal;
a length of a measurement occasion of the positioning reference signal.

In a possible embodiment, the method further includes:
sending indication information to the first terminal device; where the indication information is used to indicate the first terminal device whether to continue sending the positioning reference signal.

In a possible embodiment, the indication information is transmitted through a PSFCH.

In a possible embodiment, the indication information is indicated by a preset bit in the PSFCH.

In a seventh aspect, an embodiment of the present application provides a communication apparatus, including: a sending module and a receiving module;
where the sending module is configured to send measurement request information to a first terminal device;
the receiving module is configured to receive a positioning reference signal sent by the first terminal device.

In an eighth aspect, an embodiment of the present application provides an electronic device, including: a memory, a processor;
the memory is configured to store computer-executable instructions; and
the processor executes the computer-executed instructions stored in the memory, to cause the processor to execute the communication method according to any one of the sixth aspect.

In a ninth aspect, an embodiment of the present application provides a computer-readable storage medium, where the computer-readable storage medium stores computer-executed instructions therein, when the computer-executed instructions are executed by a processor, the communication method according to any one of the sixth aspect is implemented.

In a tenth aspect, an embodiment of the present application provides a computer program product, including a computer program, when the computer program is executed by a processor, the communication method according to any one of the sixth aspect is implemented.

The embodiments of the present application provide a communication method, an apparatus, a device, and a storage medium. Measurement request information is sent to a first terminal device, and a positioning reference signal sent by the first terminal device is received. The second terminal device sends the measurement request information to the first terminal device only when there is a positioning demand, the first terminal device sends the positioning reference signal based on the measurement request information of the second terminal device, and the first terminal device does not need to send the positioning reference signal all the time, thereby the energy consumption of the terminal device is reduced.

### BRIEF DESCRIPTION OF DRAWINGS

FIG. 1 is a schematic diagram of an application scenario provided by an embodiment of the present application.
FIG. 2 is a first flowchart of a communication method provided by an embodiment of the present application.
FIG. 3 is a second flowchart of a communication method provided by an embodiment of the present application.
FIG. 4 is a third flowchart of a communication method provided by an embodiment of the present application.
FIG. 5 is a schematic diagram of a transmission structure of a positioning reference signal provided by an embodiment of the present application.
FIG. 6 is a fourth flowchart of a communication method provided by an embodiment of the present application.
FIG. 7 is a fifth flowchart of a communication method provided by an embodiment of the present application.
FIG. 8 is a schematic structural diagram of a communication apparatus provided by an embodiment of the present application.
FIG. 9 is a schematic structural diagram of an electronic device provided by an embodiment of the present application.
FIG. 10 is a schematic structural diagram of another communication apparatus provided by an embodiment of the present application.
FIG. 11 is a schematic structural diagram of another electronic device provided by an embodiment of the present application.

### DESCRIPTION OF EMBODIMENTS

In order to make the purpose, technical solutions and advantages of the present application clearer, the technical solutions in the embodiments of the present application will be clearly and completely described below in combination with the embodiments of the present application. Obviously, the described embodiments are a part of the embodiments of the present application, not all of them. Based on the embodiments in the present application, all other embodiments obtained by those skilled in the art without creative effort fall within the protection scope of the present application.

It should be noted that the terms "first", "second", etc. involved in the embodiments of the present application are only used for a purpose of distinguishing the description, and cannot be understood as indicating or implying relative importance, nor can they be understood as indicating or implying an order.

The embodiments of the present application may be applicable to 5G (5 Generation) communication system, as well as to 4G and 3G communication systems, and may also be applicable to various new communication systems in the future, such as 6G and 7G communication systems.

The embodiments of the present application are also applicable to different network architectures, including but not limited to a relay network architecture, a dual-link architecture, a Vehicle-to-Everything (Vehicle-to-Everything) architecture, and other architectures.

In order to explain the present application more clearly, relevant technologies involved in the present application are first introduced below.

### 1. Side link (side link, SL)

A link established between terminal devices, on which data can be directly transmitted between the terminal devices. An interface for transmitting data can be called a PC5 interface or a Sidelink interface.

### 2. Terminal device

A terminal device is a device with wireless transceiver capabilities. The terminal device can be deployed on land, including indoor or outdoor, handheld, wearable, or vehicle-mounted; on water (e.g., on a ship, etc.); or in the air (e.g., on an airplane, a balloon, and a satellite, etc.). The terminal device can be a mobile phone (mobile phone), a pad (pad), a computer with wireless transceiver capabilities, a virtual reality (virtual reality, VR) terminal device, an augmented reality (augmented reality, AR) terminal device, a wireless terminal in industrial control (industrial control), a vehicle terminal device, a wireless terminal in self driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), a wearable terminal device, etc. The terminal device involved in embodiments of the present application can also be called a terminal, a user equipment (user equipment, UE), an access terminal device, a vehicle terminal, an industrial control terminal, a UE unit, a UE station, a mobile station, a mobile platform, a remote station, a remote user equipment, a mobile device, a wireless communication device, a UE agent, or a UE device, etc. The terminal device can also be fixed or mobile.

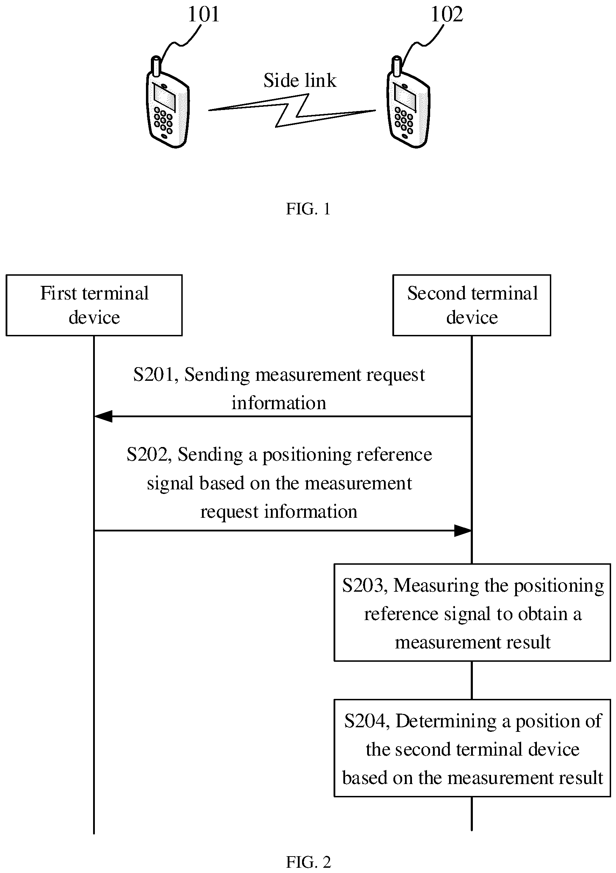

For ease of understanding, the application scenarios applicable to the embodiments of the present application are described below in combination with FIG. 1.

FIG. 1 is a schematic diagram of an application scenario provided by an embodiment of the present application. Please refer to FIG. 1, which includes a terminal device 101 and a terminal device 102. The terminal device 101 and the terminal device 102 can communicate with each other through a side link. The terminal device 101 and the terminal device 102 can be located within a coverage area of a network device at the same time, or located within the coverage area of the network device at the same time, or one located within the coverage area of the network device and the other located outside the coverage area of the network device.

The terminal device 101 can send a positioning reference signal to the terminal device 102 through a PC5 interface. The terminal device 102 can measure the received positioning reference signal and measure it, and obtain a position of the terminal device 102 based on a measurement result, where the position can be a relative position or an absolute position of the terminal device 102.

The terminal device 101 needs to continue sending the positioning reference signal so that the terminal device 102 can measure the positioning reference signal sent by the terminal device 101 at any time. This results in high energy consumption for the terminal device.

In view of this, the present application provides a communication method, in which a first terminal device sends a positioning reference signal only after receiving measurement request information sent by a second terminal device, thereby reducing the energy consumption of the terminal device.

The technical solutions shown in the present application are described in detail below through specific embodiments. It should be noted that the following embodiments may exist independently or in combination with each other, and the same parts or displayed contents will not be described repeatedly in different embodiments.

FIG. 2 is a first flowchart of a communication method provided by an embodiment of the present application. Referring to FIG. 2, the method may include:
S201, a second terminal device sends measurement request information to a first terminal device.

The execution entity of the embodiment of the present application may be a terminal device, or a communication apparatus provided in the terminal device. The communication apparatus may be implemented by software or by a combination of software and hardware. For example, the communication apparatus may be a chip, or a chip module, or an integrated development environment (Integrated Development Environment, IDE), etc.

The measurement request information may include at least one of the following:
a number of transmission times of a positioning reference signal;
a measurement time domain resource of a positioning reference signal;
a measurement frequency domain resource of a positioning reference signal;
a starting time of a measurement occasion of a positioning reference signal;
a period of a measurement occasion of a positioning reference signal;
a length of a measurement occasion of a positioning reference signal.

The second terminal device can send the measurement request information to the first terminal device through broadcast, multicast or unicast.

S202, the first terminal device sends a positioning reference signal to the second terminal device based on the measurement request information.

After receiving the measurement request information, the first terminal device triggers a transmission of the positioning reference signal.

The first terminal device can immediately send the positioning reference signal to the second terminal device upon receiving the measurement request information; the first terminal device can also send the positioning reference signal to the second terminal device after a period of time after receiving the measurement request information.

The positioning reference signal can be a channel sounding reference signal (sounding reference signal. SRS) or a positioning reference signal (positioning reference signal, PRS) in an existing protocol, or a newly defined positioning reference signal.

The number of transmissions for the positioning reference signal can be multiple.

S203, the second terminal device measures the positioning reference signal to obtain a measurement result.

The second terminal device can determine a position of the second terminal device by measuring multiple positioning reference signals sent by the first terminal device.

The measurement result can be an arrival time, an arrival angle, etc. of the positioning reference signal.

S204, the second terminal device determines a position of the second terminal device based on the measurement result.

The position can be a relative position or an absolute position of the second terminal device.

In an embodiment shown in FIG. 2, a first terminal device receives the measurement request information sent by a second terminal device, and sends the positioning reference signal to the second terminal device based on the measurement request information. The second terminal device measures the positioning reference signal to obtain the measurement result, and determines the position of the second terminal device based on the measurement result. The first terminal device sends the positioning reference signal after receiving the measurement request information, thereby reducing the energy consumption of the terminal device.

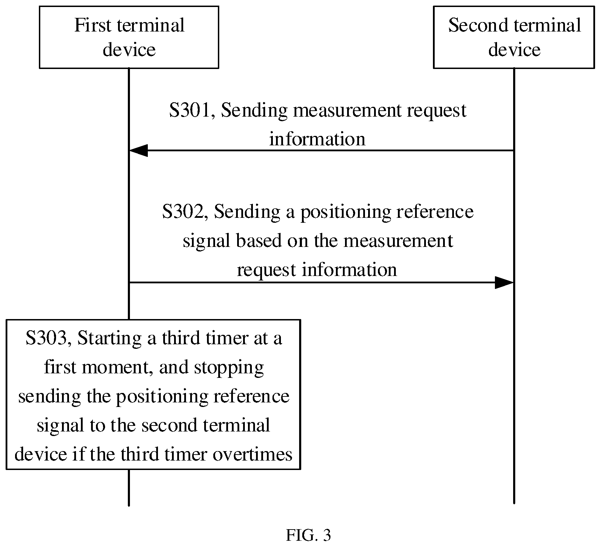

Based on the embodiment shown in FIG. 2, a moment when the first terminal device stops sending the positioning reference signal and a moment when the first terminal device continues sending the positioning reference signal are described in detail below in combination with FIG. 3 to FIG. 7.

FIG. 3 is a second flowchart of a communication method provided by an embodiment of the present application. Referring to FIG. 3 , the method includes:
S301, a second terminal device sends measurement request information to a first terminal device.

It should be noted that an execution process of S301 can refer to the execution process of S201, which will not be repeated here.

S302, the first terminal device sends a positioning reference signal to the second terminal device based on the measurement request information.

It should be noted that an execution process of S302 can refer to the execution process of S202, which will not be described in detail here.

S303, the first terminal device starts a third timer at a first moment, and stops sending the positioning reference signal to the second terminal device if the third timer overtimes.

The first moment is a moment when the first terminal device starts sending the positioning reference signal to the second terminal device.

A time interval between the first moment and a moment receiving the measurement request information is greater than or equal to 0.

For example, the first terminal device can start the third timer and send the positioning reference signal to the second terminal device upon receiving the measurement request information.

For another example, the first terminal device can start the third timer after a period of time after receiving the measurement request information.

The first terminal device continues to send the positioning reference signal to the second terminal device during a running of the third timer.

If the first terminal device receives the measurement request information sent by the second terminal device again during the running of the third timer, the third timer is restarted based on new measurement request information.

For example, if duration of the third timer is 50 ms, and the first terminal device receives the new measurement request information when the third timer runs to 30 ms, the third timer is restarted and starts counting from 0.

The time unit of the third timer can be a number of transmission times of the positioning reference signal, or ms, or a time slot, etc.

In an embodiment shown in FIG. 3, the first terminal device receives the measurement request information sent by the second terminal device, and sends the positioning reference signal to the second terminal device based on the measurement request information; the first terminal device starts the third timer at the first moment, and stops sending the positioning reference signal to the second terminal device if the third timer overtimes. The first terminal device sends the positioning reference signal after receiving the measurement request information, which reduces the energy consumption of the terminal device. At the same time, the first terminal device sets a timer and can send the positioning reference signal only during a running of the timer, which further reduces the energy consumption of the terminal device.

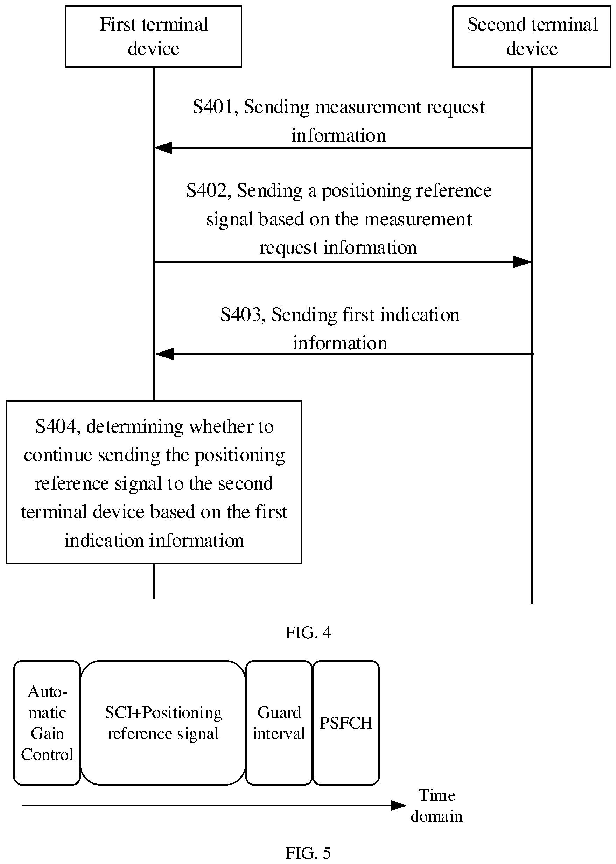

FIG. 4 is a third flowchart of a communication method provided by an embodiment of the present application. Referring to FIG. 4 , the method includes:
S401, a second terminal device sends measurement request information to a first terminal device.

It should be noted that an execution process of S401 can refer to the execution process of S201, which will not be repeated here.

S402, the first terminal device sends a positioning reference signal to the second terminal device based on the measurement request information.

It should be noted that an execution process of S402 can refer to the execution process of S202, which will not be repeated here.

S403, the second terminal device sends first indication information to the first terminal device.

The second terminal device can send the first indication information to the first terminal device based on a measurement result of the positioning reference signal.

The first indication information can be transmitted through a physical side link feedback channel (physical side link feedback channel, PSFCH).

Specifically, the first indication information can be indicated by a preset bit in the PSFCH.

For example, if a value of the preset bit in the PSFCH is 0, it means that the first indication information indicates to stop sending; if a value of the preset bit in the PSFCH is 1, it means that the first indication information indicates to continue sending.

In a side link, a transmission structure of a positioning reference signal is shown in FIG. 5. When the second terminal device receives the positioning reference signal, it needs to decode side link control information (side link control information, SCI) firstly, then receive the positioning reference signal, and then provide feedback through the PSFCH.

S404, the first terminal device determines whether to continue sending the positioning reference signal to the second terminal device based on the first indication information.

The first terminal device can determine whether to continue sending the positioning reference signal to the second terminal device by measuring the indication information in the PSFCH.

The following manners can be used to determine whether to continue sending the positioning reference signal:
if the first indication information indicates to continue sending, determining to continue sending the positioning reference signal to the second terminal device; if the first indication information indicates to stop sending, determining to stop sending the positioning reference signal to the second terminal device.

For example, if the first terminal device receives the indication information at a first moment and the indication information indicates to continue sending, it is determined to continue sending the positioning reference signal to the second terminal device. If the first terminal device receives the indication information at a second moment and the indication information indicates to stop sending, it is determined to stop sending the positioning reference signal to the second terminal device.

In an embodiment shown in FIG. 4, the first terminal device receives the measurement request information sent by the second terminal device, and sends the positioning reference signal to the second terminal device based on the measurement request information; the second terminal device sends the first indication information to the first terminal device, the first terminal device determines whether to continue sending the positioning reference signal to the second terminal device based on the first indication information. The first terminal device sends the positioning reference signal after receiving the measurement request information, which reduces the energy consumption of the terminal device. At the same time, the first terminal device can also determine whether to continue sending the positioning reference signal based on the received first indication information, which further reduces the energy consumption of the terminal device.

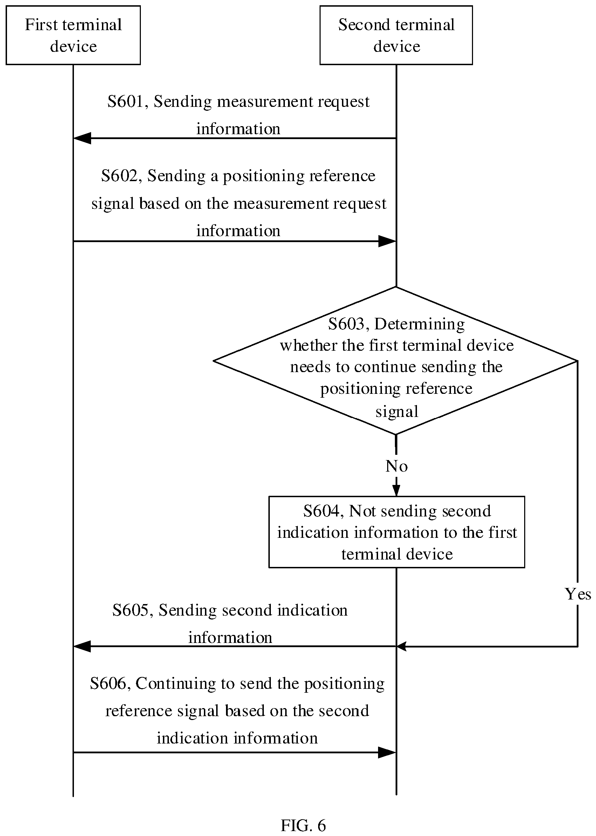

FIG. 6 is a fourth flowchart of a communication method provided by an embodiment of the present application. Referring to FIG. 6 , the method includes:
S601, a second terminal device sends measurement request information to a first terminal device.

It should be noted that an execution process of S601 can refer to the execution process of S201, which will not be repeated here.

S602, the first terminal device sends a positioning reference signal to the second terminal device based on the measurement request information.

It should be noted that an execution process of S602 can refer to the execution process of S202, which will not be repeated here.

S603, the second terminal device determines whether the first terminal device needs to continue sending the positioning reference signal.

If yes, performing S605.

If no, performing S604.

The second terminal device can determine whether the first terminal device needs to continue sending the positioning reference signal based on a measurement result of the positioning reference signal.

S604, the second terminal device does not send second indication information to the first terminal device.

The second indication information indicates that the first terminal device continues to send the positioning reference signal.

The first terminal device stops sending the positioning reference signal to the second terminal device without receiving the second indication information.

Specifically, the first terminal device can set a timer and start a first timer at a first moment, if the second indication information sent by the second terminal device is not received during a running of the first timer, the first terminal device stops sending the positioning reference signal to the second terminal device after the first timer overtimes.

For example, duration of the first timer can be 50 ms. The first terminal device can start the first timer after receiving the measurement request information, and if the second indication information sent by the second terminal device is not received during the running of the first timer, the first terminal device stops sending the positioning reference signal to the second terminal device after the first timer overtimes.

A relevant explanation of the first moment can be found in the explanation of the first moment in S303 and will not be repeated here.

S605, the second terminal device sends the second indication information to the first terminal device.

The second indication information can be transmitted through a PSFCH.

In a side link, when the second terminal device receives the positioning reference signal, it needs to decode SCI firstly, then receive the positioning reference signal, and then provide feedback through the PSFCH.

Specifically, the second indication information can be indicated by a preset bit in the PSFCH.

For example, a value of the preset bit in PSFCH can be set to 1, indicating that the second indication information indicates a continuation of sending the positioning reference signal.

S606, the first terminal device continues to send the positioning reference signal to the second terminal device based on the second indication information.

In a possible implementation, the first terminal device can also set a timer to control time of sending the positioning reference signal. A specific method is as follows:
starting a first timer at a first moment, and if the second indication information sent by the second terminal device is received during a running of the first timer, based on the second terminal device, restarting the first timer and continuing to send the positioning reference signal to the second terminal device during the running of the first timer; stopping sending the positioning reference signal to the second terminal device after the first timer overtimes.

For example, the duration of the first timer can be 50ms. The first terminal device can start the first timer after receiving the measurement request information, and send the positioning reference signal to the second terminal device during the running of the first timer. If the second indication information sent by the second terminal device is received when the first timer runs to 20ms, the first terminal device restarts the first timer and starts counting from 0, and stops sending the positioning reference signal to the second terminal device after the first timer runs to 50ms.

The time unit of the first timer can be a number of transmission times of the positioning reference signal, or ms, or a time slot, etc.

By setting a timer, time for the first terminal device to send the positioning reference signal can be further controlled, and the energy consumption of the terminal device is further reduced.

In an embodiment shown in FIG. 6, the first terminal device receives the measurement request information sent by the second terminal device, and sends the positioning reference signal to the second terminal device based on the measurement request information; the second terminal device determines whether the first terminal device needs to continue sending the positioning reference signal; if no, the first terminal device stops sending the positioning reference signal to the second terminal device; if yes, the second terminal device sends the second indication information to the first terminal device, and the first terminal device continues to send the positioning reference signal to the second terminal device based on the second indication information. The first terminal device sends the positioning reference signal after receiving the measurement request information, which reduces the energy consumption of the terminal device. At the same time, the first terminal device can also determine duration of sending the positioning reference signal based on whether it receives the second indication information, which further reduces the energy consumption of the terminal device.

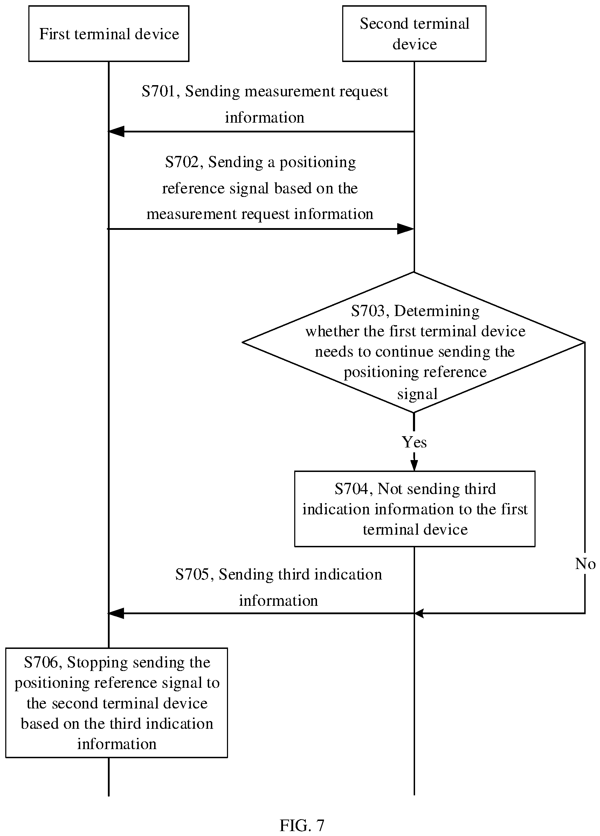

FIG. 7 is a fifth flowchart of a communication method provided by an embodiment of the present application. Referring to FIG. 7, the method may include:
S701, a second terminal device sends measurement request information to a first terminal device.

It should be noted that an execution process of S701 can refer to the execution process of S201, which will not be repeated here.

S702, the first terminal device sends a positioning reference signal to the second terminal device based on the measurement request information.

It should be noted that an execution process of S702 can refer to the execution process of S202, which will not be repeated here.

S703, the second terminal device determines whether the first terminal device needs to continue sending the positioning reference signal.

If yes, performing S704.

If no, performing S705.

The second terminal device can determine whether the first terminal device needs to continue sending the positioning reference signal based on a measurement result of the positioning reference signal.

S704, the second terminal device does not send third indication information to the first terminal device.

The third indication information indicates that the first terminal device stops sending the positioning reference signal.

The first terminal device continues to send the positioning reference signal to the second terminal device without receiving the third indication information sent by the second terminal device.

Specifically, the first terminal device can set a timer and start a second timer at a first moment, if the third indication information sent by the second terminal device is not received during a running of the second timer, the first terminal device stops sending the positioning reference signal to the second terminal device after the second timer overtimes.

For example, duration of the second timer can be 50 ms. The first terminal device can start the second timer after receiving the measurement request information, and if the third indication information sent by the second terminal device is not received during the running of the second timer, the first terminal device stops sending the positioning reference signal to the second terminal device after the second timer overtimes.

A relevant explanation of the first moment can be found in the explanation of the first moment in S303 and will not be repeated here.

S705, the second terminal device sends third indication information to the first terminal device.

The third indication information can be transmitted through a PSFCH.

In a side link, when the second terminal device receives the positioning reference signal, it needs to decode SCI firstly, then receive the positioning reference signal, and then provide feedback through the PSFCH.

Specifically, the third indication information can be indicated by a preset bit in the PSFCH.

For example, a value of the preset bit in PSFCH can be set to 0, indicating that the third indication information indicates to stop sending the positioning reference signal.

S706, the first terminal device stops sending the positioning reference signal to the second terminal device based on the third indication information.

In a possible implementation, the first terminal device can also set a timer to control time of sending the positioning reference signal. A specific method is as follows:
starting a second timer at a first moment, and if the third indication information sent by the second terminal device is received during a running of the second timer, stopping sending the positioning reference signal to the second terminal device based on the third indication information. A stopping moment is less than or equal to a termination moment of the second timer.

For example, duration of the second timer can be 50ms. The first terminal device can start the second timer after receiving the measurement request information, and send the positioning reference signal to the second terminal device during the running of the first timer. If the third indication information sent by the second terminal device is received when the first timer runs to 10ms, the first terminal device immediately stops sending the positioning reference signal to the second terminal device.

The time unit of the second timer can be a number of transmission times of the positioning reference signal, or ms, or a time slot, etc.

By setting a timer, time for the first terminal device to send the positioning reference signal can be further controlled, and the energy consumption of the terminal device is further reduced.

In an embodiment shown in FIG. 7, the first terminal device receives the measurement request information sent by a second terminal device, and sends the positioning reference signal to the second terminal device based on the measurement request information. The second terminal device determines whether the first terminal device needs to continue sending the positioning reference signal; if yes, the second terminal device does not send the third indication information to the first terminal device; if no, the second terminal device sends the third indication information to the first terminal device, and the first terminal device stops sending the positioning reference signal to the second terminal device based on the third indication information. The first terminal device sends the positioning reference signal after receiving the measurement request information, which reduces the energy consumption of the terminal device. At the same time, the first terminal device can also determine duration of sending the positioning reference signal based on whether it receives the third indication information, which further reduces the energy consumption of the terminal device.

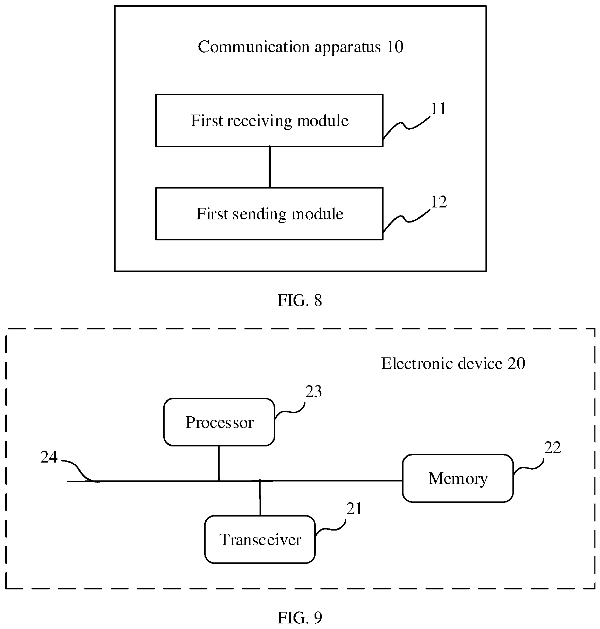

FIG. 8 is a schematic structural diagram of a communication apparatus provided by an embodiment of the present application. Referring to FIG. 8, the apparatus 10 includes: a first receiving module 11 and a first sending module 12;
where the first receiving module 11 is configured to receive measurement request information sent by a second terminal device;
the first sending module 12 is configured to send a positioning reference signal to the second terminal device based on the measurement request information; where the positioning reference signal is used to determine a position of the second terminal device.

In a possible implementation, the measurement request information includes at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal;
a length of a measurement occasion of the positioning reference signal.

In a possible implementation, the apparatus 10 further includes a second receiving module and a determining module;
where the second receiving module is configured to receive first indication information sent by the second terminal device;
the determining module is configured to determine whether to continue sending the positioning reference signal to the second terminal device based on the first indication information.

In a possible implementation, the determining module is specifically configured to:
determine to continue sending the positioning reference signal to the second terminal device if the first indication information indicates to continue sending;
determine to stop sending the positioning reference signal to the second terminal device if the first indication information indicates to stop sending.

In a possible implementation, the first indication information is transmitted through a physical side link feedback channel PSFCH.

In a possible implementation, the first indication information is indicated by a preset bit in the PSFCH.

In a possible implementation, the apparatus 10 further includes a third receiving module and a second sending module;
where the third receiving module is configured to receive second indication information sent by the second terminal device;
the second sending module is configured to continue to send the positioning reference signal to the second terminal device based on the second indication information.

In a possible implementation, the third receiving module is specifically configured to:
start a first timer at a first moment, and receive the second indication information sent by the second terminal device during a running of the first timer.

In a possible implementation, the second sending module is specifically configured to:
restart, based on the second indication information, the first timer and continue to send the positioning reference signal to the second terminal device during the running of the first timer.

In a possible implementation, the apparatus 10 further includes a first stopping module, the first stopping module is configured to:
stop sending the positioning reference signal to the second terminal device after the first timer overtimes.

In a possible implementation, the apparatus 10 further includes a second stopping module, the second stopping module is configured to:
stop sending the positioning reference signal to the second terminal device if the second indication information sent by the second terminal device is not received.

In a possible implementation, the second stopping module is specifically configured to:
start a first timer at a first moment, and stop sending the positioning reference signal to the second terminal device after the first timer overtimes if the second indication information sent by the second terminal device is not received during a running of the first timer.

In a possible implementation, the second indication information is transmitted through a PSFCH.

In a possible implementation, the second indication information is indicated by a preset bit in the PSFCH.

In a possible implementation, the apparatus 10 further includes a fourth receiving module and a third stopping module;
where the fourth receiving module is configured to receive third indication information sent by the second terminal device;
the third stopping module is configured to stop sending the positioning reference signal to the second terminal device based on the third indication information.

In a possible implementation, the fourth receiving module is specifically configured to:
start a second timer at a first moment, and receive the third indication information sent by the second terminal device during a running of the second timer.

In a possible implementation, the specific configuration of the third stopping module is as follows: a stopping moment is less than or equal to a termination moment of the second timer.

In a possible implementation, the apparatus 10 further includes a third sending module, the third sending module is configured to:
continue sending the positioning reference signal to the second terminal device if third indication information sent by the second terminal device is not received.

In a possible implementation, the third sending module is specifically configured to:
start a second timer at a first moment, and stop sending the positioning reference signal to the second terminal device after the second timer overtimes if the third indication information sent by the second terminal device is not received during a running of the second timer.

In a possible implementation, the third indication information is transmitted through a PSFCH.

In a possible implementation, the third indication information is indicated by a preset bit in the PSFCH.

In a possible implementation, the apparatus 10 further includes a fourth stopping module, the fourth stopping module is configured to:
start a third timer at a first moment, and stop sending the positioning reference signal to the second terminal device if the third timer overtimes.

In a possible implementation, the first moment is a moment when the positioning reference signal is sent to the second terminal device; where a time interval between the first moment and a moment receiving the measurement request information is greater than or equal to 0.

The communication apparatus 10 provided by the embodiments of the present application can execute the technical solutions shown in the above method embodiments, and the implementation principle and beneficial effect are similar, which will not be repeated here.

FIG. 9 is a schematic structural diagram of an electronic device provided by an embodiment of the present application. Please refer to FIG. 9, the electronic device 20 includes a transceiver 21, a memory 22, and a processor 23. The transceiver 21 can include a transmitter and/or a receiver. The transmitter can also be referred to as an emitter, a sending machine, a sending port, or a sending interface, etc., and the receiver can also be referred to as a receiving set, a receiving machine, a receiving port, or a receiving interface, etc. For example, the transceiver 21, the memory 22, and the processor 23 are interconnected through a bus 24.

The memory 22 is configured to store computer-executable instructions.

The processor 23 is configured to execute the computer-executed instructions stored in the memory, to cause the electronic device 20 to execute any one of the communication methods shown above.

The transceiver 21 is configured to execute transmitting and receiving functions of the electronic device 20 in the communication methods described above.

The electronic device can be a chip, a module, an IDE, etc.

The electronic device shown in the embodiment of FIG. 9 can execute the technical solutions shown in the above method embodiments, and the implementation principle and beneficial effect are similar, which will not be repeated here.

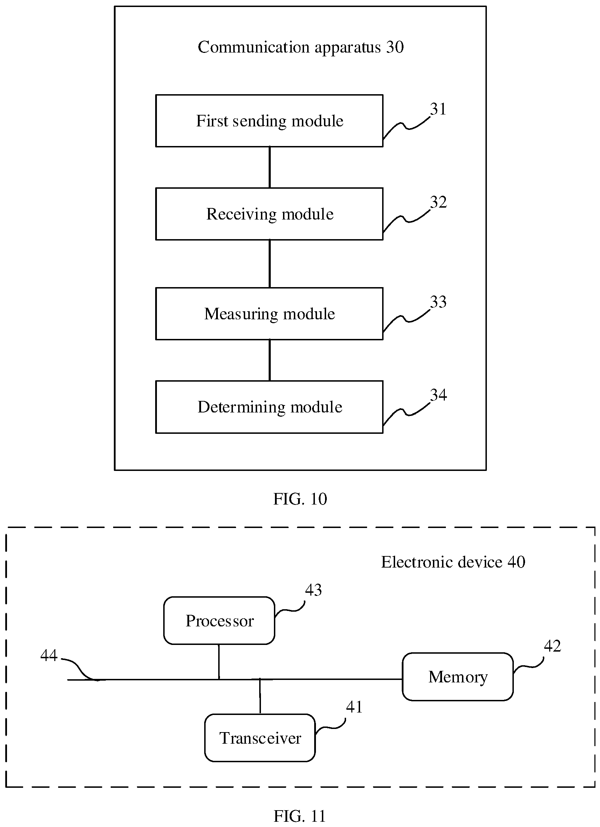

FIG. 10 is a schematic structural diagram of another communication apparatus provided by an embodiment of the present application. Referring to FIG. 10, the apparatus 30 includes: a first sending module 31, a receiving module 32, a measuring module 33 and a determining module 34;
where the first sending module 31 is configured to send measurement request information to a first terminal device;
the receiving module 32 is configured to receive a positioning reference signal sent by the first terminal device;
the measuring module 33 is configured to measure the positioning reference signal to obtain a measurement result.
the determining module 34 is configured to determine a position of the second terminal device based on the measurement result.

In a possible implementation, the measurement request information includes at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal;
a length of a measurement occasion of the positioning reference signal.

In a possible implementation, the apparatus 30 further includes a second sending module, the second sending module is specifically configured to:
send indication information to the first terminal device; where the indication information is used to indicate the first terminal device whether to continue sending the positioning reference signal.

In a possible implementation, the indication information is transmitted through a PSFCH.

In a possible implementation, the indication information is indicated by a preset bit in the PSFCH.

The communication apparatus 30 provided by the embodiments of the present application can execute the technical solutions shown in the above method embodiments, and the implementation principle and beneficial effect are similar, which will not be repeated here.

FIG. 11 is a schematic structural diagram of another electronic device provided by an embodiment of the present application. Please refer to FIG. 11, the electronic device 40 includes a transceiver 41, a memory 42, and a processor 23. The transceiver 41 can include a transmitter and/or a receiver. The transmitter can also be referred to as an emitter, a sending machine, a sending port, or a sending interface, etc., and the receiver can also be referred to as a receiving set, a receiving machine, a receiving port, or a receiving interface, etc. For example, the transceiver 41, the memory 42, and the processor 43 are interconnected through a bus 44.

The memory 42 is configured to store computer-executable instructions.

The processor 43 is configured to execute the computer-executed instructions stored in the memory, to cause the electronic device 40 to execute any one of the communication methods shown above.

The transceiver 41 is configured to execute transmitting and receiving functions of the electronic device 40 in the communication methods described above.

The electronic device can be a chip, a module, an IDE, etc.

The electronic device shown in the embodiment of FIG. 11 can execute the technical solutions shown in the above method embodiments, and the implementation principle and beneficial effect are similar, which will not be repeated here.

The embodiments of the present application provide a computer-readable storage medium, where the computer-readable storage medium stores computer-executable instructions therein, and when a processor executes the computer-executable instructions, the communication methods described above are implemented.

The embodiments of the present application further provide a computer program product, where the computer program product can be executed by a processor, when the computer program product is executed, the communication method executed by any one of electronic devices shown above can be implemented.

The terminal device, the computer-readable storage medium and the computer program product of the embodiments of the present application can execute the communication methods described above, and the specific implementation process and beneficial effect thereof refer to the above and will not be repeated here.

All or part of the steps to implement each of the method embodiments described above can be completed by the hardware related to the program instructions. The aforementioned program can be stored in a readable memory. When the program is executed, the steps included in each of the method embodiments described above are performed. The aforementioned memory (storage medium) includes: a read-only memory (English: read-only memory, abbreviation: ROM), a RAM, a flash memory, a hard disk, a solid state disk, a magnetic tape (English: magnetic tape), a floppy disk (English: floppy disk), an optical disc (English: optical disc) and any combination thereof.

The embodiments of the present application are described with reference to a flowchart and/or a block diagram of a method, apparatus (system), and computer program product according to the embodiment of the present application. It should be understood that each process and/or box in the flowchart and/or block diagram, as well as a combination of the process and/or box in the flowchart and/or block diagram, can be implemented by computer program instructions. These computer program instructions can be provided to a processing unit of a general-purpose computer, a specialized computer, an embedded processing machine, or other programmable data processing devices to produce a machine so that the instructions executed through the processing unit of the computer or other programmable data processing device produce an apparatus for performing the functions specified in one or more processes in the flowchart and/or one or more boxes in the block diagrams.

These computer program instructions can also be stored in a computer-readable memory capable of directing a computer or other programmable data-processing device to work in a particular manner so that the instructions stored in the computer-readable memory result in a manufactured product including an instruction apparatus, the instruction apparatus implements the functions specified in one or more processes in the flowchart and/or one or more boxes in the block diagrams.

These computer program instructions can also be loaded onto a computer or other programmable data processing device so that a series of operational steps are performed on the computer or other programmable device to produce computer-implemented processing, thereby the instructions executed on the computer or other programmable device provide steps for implementing the function specified in one or more processes in the flowchart and/or one or more boxes in the block diagrams.

Obviously, a person skilled in the art may make various changes and variants to the embodiments of the present application without departing from the spirit and scope of the present application. Thus, if these modifications and variants of the embodiments of the present application fall within the scope of the claims of the present application and equivalents thereof, the present application is also intended to include such modifications and variants.

## Claims

1. A communication method, applied to a first terminal device, the method comprising:
receiving measurement request information sent by a second terminal device; and
sending a positioning reference signal to the second terminal device based on the measurement request information; wherein the positioning reference signal is used to determine a position of the second terminal device.

2. The method according to claim 1, wherein the measurement request information comprises at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal; and
a length of a measurement occasion of the positioning reference signal.

3. The method according to claim 2, wherein the method further comprises:
receiving first indication information sent by the second terminal device; and
determining whether to continue sending the positioning reference signal to the second terminal device based on the first indication information.

4. The method according to claim 3, wherein the determining whether to continue sending the positioning reference signal to the second terminal device based on the first indicative information comprises:
if the first indication information indicates to continue sending, determining to continue sending the positioning reference signal to the second terminal device; and
if the first indication information indicates to stop sending, determining to stop sending the positioning reference signal to the second terminal device.

5. The method according to claim 3 or 4, wherein the first indication information is transmitted through a physical side link feedback channel PSFCH.

6. The method according to claim 5, wherein the first indication information is indicated by a preset bit in the PSFCH.

7. The method according to claim 2, wherein the method further comprises:
receiving second indication information sent by the second terminal device; and
continuing to send the positioning reference signal to the second terminal device based on the second indication information.

8. The method according to claim 7, wherein the receiving the second indication information sent by the second terminal device comprises:
starting a first timer at a first moment, and receiving the second indication information sent by the second terminal device during a running of the first timer.

9. The method according to claim 8, wherein the continuing to send the positioning reference signal to the second terminal device based on the second indication information comprises:
based on the second indication information, restarting the first timer and continuing to send the positioning reference signal to the second terminal device during the running of the first timer.

10. The method according to claim 9, wherein the method further comprises:
stopping sending the positioning reference signal to the second terminal device after the first timer overtimes.

11. The method according to claim 2, wherein the method further comprises:
if second indication information sent by the second terminal device is not received, stopping sending the positioning reference signal to the second terminal device.

12. The method according to claim 11, wherein the if the second indication information sent by the second terminal device is not received, stopping sending the positioning reference signal to the second terminal device comprises:
starting a first timer at a first moment, and if the second indication information sent by the second terminal device is not received during a running of the first timer, stopping sending the positioning reference signal to the second terminal device after the first timer overtimes.

13. The method according to any one of claims 7 to 12, wherein the second indication information is transmitted through a PSFCH.

14. The method according to claim 13, wherein the second indication information is indicated by a preset bit in the PSFCH.

15. The method according to claim 2, wherein the method further comprises:
receiving third indication information sent by the second terminal device; and
stopping sending the positioning reference signal to the second terminal device based on the third indication information.

16. The method according to claim 15, wherein the receiving the third indication information sent by the second terminal device comprises:
starting a second timer at a first moment, and receiving the third indication information sent by the second terminal device during a running of the second timer.

17. The method according to claim 16, wherein a moment to stop sending the positioning reference signal is less than or equal to a termination moment of the second timer.

18. The method according to claim 2, wherein the method further comprises:
if third indication information sent by the second terminal device is not received, continuing sending the positioning reference signal to the second terminal device.

19. The method according to claim 18, wherein the method further comprises:
starting a second timer at a first moment, and if the third indication information sent by the second terminal device is not received during a running of the second timer, stopping sending the positioning reference signal to the second terminal device after the second timer overtimes.

20. The method according to any one of claims 15 to 19, wherein the third indication information is transmitted through a PSFCH.

21. The method according to claim 20, wherein the third indication information is indicated by a preset bit in the PSFCH.

22. The method according to claim 2, wherein the method further comprises:
starting a third timer at a first moment, and stopping sending the positioning reference signal to the second terminal device if the third timer overtimes.

23. The method according to claim 8, 12, 16, 19 or 22, wherein the first moment is a moment when the positioning reference signal is started to send to the second terminal device; wherein a time interval between the first moment and a moment receiving the measurement request information is greater than or equal to 0.

24. A communication method, applied to a second terminal device, the method comprising:
sending measurement request information to a first terminal device;
receiving a positioning reference signal sent by the first terminal device;
measuring the positioning reference signal to obtain a measurement result; and
determining a position of the second terminal device based on the measurement result.

25. The method according to claim 24, wherein the measurement request information comprises at least one of the following:
a number of transmission times of the positioning reference signal;
a measurement time domain resource of the positioning reference signal;
a measurement frequency domain resource of the positioning reference signal;
a starting time of a measurement occasion of the positioning reference signal;
a period of a measurement occasion of the positioning reference signal; and
a length of a measurement occasion of the positioning reference signal.

26. The method according to claim 25, wherein the method further comprises:
sending indication information to the first terminal device; wherein the indication information is used to indicate the first terminal device whether to continue sending the positioning reference signal.

27. The method according to claim 26, wherein the indication information is transmitted through a PSFCH.

28. The method according to claim 27, wherein the indication information is indicated by a preset bit in the PSFCH.

29. A communication apparatus, comprising: a receiving module and a sending module; wherein
the receiving module is configured to receive measurement request information sent by a second terminal device; and
the sending module is configured to send a positioning reference signal to the second terminal device based on the measurement request information; wherein the positioning reference signal is used to determine a position of the second terminal device.

30. A communication apparatus, comprising: a sending module, a receiving module, a measuring module and a determining module; wherein
the sending module is configured to send measurement request information to a first terminal device;
the receiving module is configured to receive a positioning reference signal sent by the first terminal device;
the measuring module is configured to measure the positioning reference signal to obtain a measurement result; and
the determining module is configured to determine a position of the second terminal device based on the measurement result.

31. An electronic device, comprising: a memory, a processor;
the memory is configured to store computer-executable instructions; and
the processor executes the computer-executed instructions stored in the memory, to cause the processor to execute the communication method according to any one of claims 1 to 23, or the communication method according to any one of claims 24 to 28.

32. A computer-readable storage medium, wherein the computer-readable storage medium stores computer-executed instructions therein, when the computer-executed instructions are executed by a processor, the communication method according to any one of claims 1 to 23 or the communication method according to any one of claims 24 to 28 is implemented.

33. A computer program product, comprising a computer program, configured to implement the communication method according to any one of claims 1 to 23 or the communication method according to any one of claims 24 to 28 when the computer program is executed by a processor.
